# EUROPÄISCHE PATENTSCHRIFT

(11) **EP 1 167 782 B1**
(45) Veröffentlichungstag und Bekanntmachung des Hinweises auf die Patenterteilung: **07.06.2006**
(21) Anmeldenummer: 01114498.7
(22) Anmeldetag: 15.06.2001
(51) Int. Cl.: F16B 35/02, F16B 7/18

(54) **Längsgeteilte Hammerkopfschraube für eine T-Nut**
Longitudinaly divided hammer-head-screw for T-grooves
Boulon partagé dans le sens de la longueur pour des rainures en forme de T

(30) Priorität: 20.06.2000 DE 20010915 U
(43) Veröffentlichungstag der Anmeldung: 02.01.2002
(73) Patentinhaber: Rixen, Wolfgang, Dipl.-Ing., 42699 Solingen (DE); Pies, Gerrit, 42699 Solingen (DE)
(72) Erfinder: Rixen, Wolfgang, Dipl.-Ing., 42699 Solingen (DE); Pies, Gerrit, 42699 Solingen (DE); Schuster, Harald, 42659 Solingen (DE)
(74) Vertreter: Draudt, Axel Hermann Christian

(56) Entgegenhaltungen:
- DE-C- 809 733
- GB-A- 2 297 815
- US-A- 2 352 297
- US-A- 2 875 674

## Beschreibung

Die Erfindung betrifft einen nutseitigen Befestigungspartner einer Befestigungspaarung nach dem Oberbegriff des Anspruchs 1.

Nutseitige in einer T-Nut zu verankernden Befestigungspartner sind als sogenannte Hammerkopfschrauben bekannt. Diese weisen einen Hammerkopf auf, dessen Breite etwas kleiner als die Innenbreite der T-Nut ist. Demgegenüber ist der Hammerkopf von vergleichsweise geringer Länge, so daß er in einer Einsetzorienterung - gegenüber seiner Montageposition um 90° um eine Nut-Vertikalachse gedreht - durch die Nutöffnung hindurch in die T-Nut eingesetzt werden kann. Der Befestigungspartner kann dann - unter Beibehaltung seines Nuteingriffs - um 90° um die genannte Nut-Vertikalachse gedreht werden, so daß Hintergriffabschnitte des Hammerkopfes die Hintergriffstege der T-Nut hintergreifen. Dazu ist die Breite des Hammerkopfes naturgemäß größer als die Nutweite, das ist die Breite der Nutöffnung.

Die Hammerkopfschraube hat ein in der Montageposition aus der Nut herausragendes Schraubgewinde, auf das ein äußerer Befestigungspartner - beispielsweise eine Mutter - aufgeschraubt werden kann. Zwischen dem Schraubgewinde und dem Hammerkopf der Hammerkopfschraube sind Übergangsabschnitte, an die strenge, geometrische Anforderungen zu stellen sind:

So müssen diese in der Einsetzorientierung durch die Nutöffnung hindurchpassen, damit der Hammerkopf der Hammerkopfschraube in Nuteingriff gebracht werden kann. Unter der Drehung um 90° um die Nut-Vertikalachse dürfen keine Drehhemmungen vorhanden sein, so daß der Umfang der Übergangsabschnitte entsprechend abgerundet und schmal sein muß. Andererseits muß in der Montageposition eine (Weiter-) Drehhemmung gegeben sein, die aufgrund der Geometrie des Hammerkopfes nur durch die Übergangsabschnitte geleistet werden kann. Diese haben eine Art Drehanschlag, der beispielsweise als Anschlagskante ausgebildet sein kann. Dieser Anschlag schlägt beim Erreichen der Montageposition an die Innenseite der Hintergriffstege der T-Nut an. Dadurch ist die Montageposition vorbestimmt.

Aus oben Gesagtem geht hervor, daß einer solchen Hammerkopfschraube in ihrer Geometrie und ihrer Dimensionierung im wesentlichen durch die Nutdimensionierung vorbestimmte, enge Schranken gesetzt sind; so ist die Breite - das ist die Ausdehnung des Hammerkopfes in der Montageposition in Querrichtung zur Nut - durch die Innenbreite der T-Nut begrenzt, da der Hammerkopf als ganzes unter Nuteingriff innerhalb der T-Nut drehbar sein muß. Darüber hinaus ist auch die Länge des Hammerkopfs durch die Nutweite nach oben beschränkt. Dadurch ist der Festigkeit des Hammerkopfes - und damit der gesamten Befestigungspaarung - eine enge Grenze gesetzt.

Zudem müssen die genannten Geometrieanforderungen der Übergangsabschnitte zwischen Hammerkopf und Schraubenschaft erfüllt sein, so daß die Verbindungsabschnitte in Nut-Quer-und -Längsrichtung nicht oder lediglich geringfügig und abschnittsweise größer sein dürfen als die Nutweite, und zwar lediglich im Bereich der genannten Anschlagskante.

Durch die geometrischen Anforderungen sind außerdem weitere Einschränkungen gegeben. So muß - wie oben gesagt - eine Drehhemmung realisiert werden, die den Befestigungspartner schwächt; beispielsweise kann eine Anschlagskante eine solche Schwächung des Befestigungspartners bedeuten. Zudem ist ein praktisch punkt- oder linienförmiger Anschlag an die Hintergriffstege der T-Nut notwendig, der sich bei großer Belastung auch in die Hintergriffstege einkerben kann. Auch dadurch ist ein größerer Verschleiß sowie eine verringerte Festigkeit bedingt. Solche Kerben können auch Rißkeime bilden.

Aus der US-A-2,352,297 ist ein Befestigungspartner mit den Merkmalen des Oberbegriffs -des Anspruchs 1 bekannt. Ein Schraubenbolzen ist mit einem Kopf versehen, der in eine T-Nut paßt. Der Schraubenbolzen ist glatt längs geteilt, so daß erst eine Hälfte mit einem halben Schraubenkopf und dann die andere Hälfte mit dem anderen halben Schraubenkopf eingesetzt wird. Das Einsetzen erfolgt mit in Nutlängsrichtung geringfügigem Abstand. Die eingesetzten Schraubenbolzenhälften werden dann in Nutlängsrichtung zusammengeschoben. Der Außendurchmesser des Schraubgewindes entspricht dem des übrigen Schraubenschafts, der einen geringeren Durchmesser hat, als es der Nutweite der T-Nut entspricht, wodurch die Schraubbolzenhälften vor der verschraubung auf dem Nutengrund sich absetzen.

Der vorliegenden Erfindung liegt daher die Aufgabe zugrunde, einen nutseitigen Befestigungspartner der eingangs genannten Art anzugeben, der hinsichtlich seiner Abmessungen und seiner Geometrie praktisch ausschließlich durch die Dimensionierung der T-Nut unter Berücksichtigung seiner endgültigen Montagestellung in der T-Nut (Hintergriffstellung) praktisch unabhängig von der Eingriffsprozedur vorbestimmt ist und der trotzdem auch nachträglich in praktisch jeden freien Nutabschnitt einsetzbar ist, insbesondere auch bei verbauten Nutenden.

Diese Aufgabe wird gelöst durch die Merkmale des Anspruchs 1.

Die Erfindung bietet den Vorteil, daß der nutseitige Befestigungspartner praktisch ausschließlich im Hinblick auf seine Geometrieanforderungen in der endgültigen Montageposition auszulegen und zu dimensionieren ist. Dies kann insbesondere praktisch ohne Einschränkungen hinsichtlich der Eingriffsprozedur erfolgen.

Dieser vorteil wird dadurch erreicht, daß ein üblicher Befestigungspartner (sogenannter Nutenstein) aus zumindest zwei Breitenstücken besteht. Diese bilden die Hintergriffabschnitte. Dies bedeutet, daß jedes Breitenstück auch zumindest einen Teil eines Hintergriffabschnitts bildet; insbesondere bildet jedes Breitenstück den zu einem zugeordneten Hintergriffsteg (d.i. der Hintergriffsteg an der entsprechenden Breitseite der T-Nut in der Montageposition des jeweiligen Breitenstückes) korrespondierenden Hintergriffabschnitt.

Die Hintergriffabschnitte, die in die T-Nut eingreifen, sind von derart geringer Breite, daß die Einsetzorientierung praktisch lagerichtig bezüglich der Nut-Längsrichtung eingenommen wird. Dies bedeutet, daß der Befestigungspartner in einer Einsetzorientierung (durch die Nutöffnung hindurch) in die T-Nut einzusetzen ist, in welcher er praktisch in seiner Montage-Endposition bezüglich der Nut-Längsrichtung ist. Er ist insbesondere nicht - wie bei verwendung einer Hammerkopfscheibe notwendig - in seiner Einsetzorientierung gegenüber der Nut-Längsrichtung um eine Nut-Vertikalachse verdreht.

Eine solche Verdrehung, die die geometrischen Einschränkungen des Standes der Technik bedingt (siehe oben) wird durch die Aufteilung des Befestigungspartners in zwei Breitenstücke vermieden, die einzeln bezüglich der Nut-Längsrichtung in oben gesagter weise lagerichtig hinsichtlich ihrer Montage-Endposition durch die Nutöffnung hindurchpassen.

Trotzdem ist ein solcher Befestigungspartner von hoher Festigkeit. Er ist nämlich unter Beibehaltung seines Nuteingriffs in Deckung mit den übrigen Breitenstücken zu bringen. Das bedeutet, daß er so zu orientieren/verschieben ist, daß er die anderen Breitenstücke kontaktiert, wobei alle Breitenstücke in der genannten Deckungsposition als nutseitiger Befestigungspartner zusammenwirken.

Dadurch ergibt sich eine hohe Festigkeit des Befestigungspartners. Dieser wird nämlich durch den äußeren Befestigungspartner in Deckung derart zusammengehalten und als ein nutseitiger Befestigungspartner zusammengefaßt, daß er praktisch die Festigkeit eines entsprechenden einstückigen und ungeteilten Befestigungspartners erreichen kann. Da es sich um Breitenstücke handelt, können diese allenfalls in Nut-Längsrichtung oder in Nut-Vertikalrichtung gegeneinander verschoben werden. Gegen die Verschiebung in Nut-Vertikalrichtung hemmen in der Montage-Endposition die Hintergriffabschnitte im Sinne eines Befestigungspartners zusätzlich zu dem äußeren Befestigungspartner, der auch eine Verbindung der Breitenstücke gibt.

Gegen eine eventuelle Verschiebung in Nut-Längsrichtung oder gegen eine Verdrehung werden die Breitenstücke ebenfalls durch den äußeren Befestigungspartner (in der Regel kraftschlüssig) gehemmt. Da der äußere Befestigungspartner ohnehin die Festigkeit einer erfindungsgemäßen Befestigungspaarung entscheidend mitbestimmt, sind praktisch keine Einschränkungen gegenüber der Festigkeit eines üblichen Befestigungspartners gegeben.

Im Gegenteil ist ein erfindungsgemäßer nutseitiger Befestigungspartner an den entscheidenden Stellen noch von höherer Festigkeit. Durch den Wegfall der Gevmetrie-Einschränkungen kann die Länge des Nuteingriffs praktisch beliebig groß werden, da jedes Breitenstück ohnehin in Nut-Längsrichtung lagerichtig einzuführen ist.

Es ist gewünscht, daß ein erfindungsgemäßer, nutseitiger Befestigungspartner bezüglich der Befestigung in der Nut alle Vorteile von bekannten Nutensteinen (siehe zum Beispiel Katalog Item MB Systembaukasten 1995, S. 81) aufweist, insbesondere also leicht einsetzbar ist, eine große Festigkeit aufweist und praktisch einen Schraubanker in der T-Nut bietet. Dazu ist vorgesehen, daß jedes Breitenstück einen Schraubenschaftabschnitt und einen Ankerkopfabschnitt aufweist, die in Deckung als Schraubenschaft und Ankerkopf zusammenwirken, wobei der Ankerkopf die Hintergriffabschnitte bildet und im Nuteingriff eine formschlüssige Drehhemmung bezüglich Verschraubung des Schraubenschafts gibt und wobei der Schraubenschaft bei Nuteingriff des Ankerkopfes aus der T-Nut verschraubbar hervorragt und die Breitenstücke die Teile eines im wesentlichen parallel zur Schraubenachse des Schraubenschaftes bis zu seinem Ankerkopf geteilten Schraubankers sind. Dabei kann der Nenndurchmesser des Schraubgewindes auch größer oder gleich der Nutweite sein.

Erstmalig für einen Nutenstein, der durch die Nutöffnung einzusetzen ist, ist es aufgrund der Erfindung möglich, daß ein Ankerkopf eine größere Länge aufweist, als die Nutweite der T-Nut beträgt, insbesondere als die Innenbreite der T-Nut beträgt. Der Ankerkopf muß nämlich nicht - wie beispielsweise die oben genannte Hammerkopfschraube - in einer gegenüber seiner Hintergrifforientierung um 90° um eine Nut-Vertikalachse verdrehten Drehstellung eingesetzt werden. Dadurch kann die Länge eines erfindungsgemäßen, nutseitigen Befestigungspartners praktisch beliebig sein. Dadurch ist im Ergebnis eine wesentlich höhere Auszugfestigkeit und eine größere Verdrehsicherheit innerhalb der T-Nut gegeben, was aber auch gem. US-A-2,352,297 möglich ist, wobei dort kein Nutenstein gezeigt ist. Erfindungsgemäß ist allerdings nach dem Zusammenführen der Breitenstücke, aber noch vor dem Verschrauben aufgrund der Formschlüssigkeit sowohl in Vertikalrichtung als auch in Querrichtung der T-Nut der Befestigungspartner positionsmäßig fixiert.

Bevorzugte Ausgestaltungen der vorliegenden Erfindung sind in den Unteransprüchen beschrieben.

So kann ein Breitenstück eine in Nut-Vertikalrichtung bezüglich seiner Montageposition praktisch lagerichtige Einsetzorientierung aufweisen. Hierzu ist die Breite der eingesetzten Hintergriffabschnitte des Breitenstücks so klein, daß dieses - ohne um eine Nut-Längsrichtung gegenüber der Nut-vertikalrichtung verschwenkt zu sein - durch die Nutöffnung hindurchpaßt. Die genannte Breite ist insbesondere kleiner als die Breite der Nutöffnung.-Auf die genaue Ausgestaltung wird später näher eingegangen.

Die zur Verfügung stehende Hintergrifffläche der Hintergriffstege der T-Nut kann in größtmöglichem Umfang zum Hintergriff durch die Hintergriffabschnitte des nutseitigen Befestigungspartners genutzt werden, wenn ein Breitenstück in seiner Einsetzorientierung bezüglich seiner Montageposition gegenüber der Nut-Vertikalrichtung um eine Nut-Längsachse verschwenkt ist. Die Hintergriffabschnitte sind in der Einsetzorientierung gegenüber der Nut-Vertikalrichtung verschwenkt, so daß insgesamt die (vertikale) Projektion der Hintergriffabschnitte auf die Nutöffnung kleiner wird. Dadurch paßt auch ein nutseitiger Befestigungspartner durch die Nutöffnung hindurch, dessen Breite - inklusive der Breite der Hintergriffabschnitte - größer ist als die Nutweite, das ist die Breite der Nutöffnung. Die Geometrie der eingreifenden Abschnitte des nutseitigen Befestigungspartners ist dann derart ausgestaltet, daß diese unter Beibehaltung des Nuteingriffs, das heißt in der Nut, in die Hintergrifflage der Montageposition zurückverschwenkt werden können.

Es können mehr als zwei Breitenstücke vorhanden sein; bevorzugt ist jedoch, daß genau zwei Breitenstücke vorhanden sind. Damit ist praktisch eine Verringerung der Einsetzbreite bis auf die Hälfte der Gesamtbreite der Hintergriffabschnitte möglich, wobei zwei Breitenstücke noch sehr leicht handhabbar und in Deckung zu bringen sind.

Die Breitenstücke weisen korrespondierende Deckungsflächen auf, die in Deckung entlang einer gemeinsamen Trennfläche aneinander anliegen. Dann ist durch die Anlage der Dekkungsflächen eine zuverlässig und reproduzierbar zu erreichende Deckungslage gegeben. Die Deckungsflächen bieten praktisch Anschläge, die automatisch die richtige Lage der Breitenstücke zueinander geben. Damit wird insbesondere eine relative Verkippung (Verkantung) der Breitenstücke verinieden.

Die Breitenstücke sind bezüglich der gemeinsamen Trennfläche praktisch spiegelsymmetrisch und/oder bezüglich einer gemeinsamen Achse praktisch drehsymmetrisch. Dies erleichtert die Fertigung der Breitenstücke beträchtlich. Sind die Breitenstücke derart ausgelegt, weisen sie eine im wesentlichen übereinstimmende Geometrie auf. Besonders bevorzugt sind die Breitenstücke, die einen nutseitigen Befestigungspartner bilden, völlig identisch, so daß es nicht darauf ankommt, diese in einer bestimmten Reihenfolge oder auf einer bestimmten (Breit-)Seite der Nut einzusetzen. Es können beispielsweise viele identische Breitenstücke vorgesehen sein, wobei wahllos ein Breitenstück eingesetzt und ebenfalls wahllos ein weiteres Breitenstück dazugenommen und eingesetzt und in Deckung mit dem bereits eingesetzten Breitenstück gebracht werden kann.

Die Breitenstücke können in unterschiedlichen Längsbereichen der Nut eingesetzt werden. Nach dem Einsetzen werden sie einfach zusammengeschoben. Sie müssen also nicht paarig gegenüberliegend eingesetzt werden, was den zur Verfügung stehenden Breitenspieleraum für jedes Breitenstück maximiert.

Die Breitenstücke geben eine automatische, formschlüssige Hemmung in ihre Deckungslage, wenn sie korrespondierende Deckungsanschläge aufweisen, die die Längsverschiebung in eine jeweilige Längsrichtung bei Deckung der korrespondierenden Breitenstücke hemmen. Dies ist einfach dadurch zu realisieren, daß die Deckungsanschläge einander zugewandte, korrespondierende Breitenstufen der Breitenstücke sind.

Eine praktikable und äußerst einfache und auszugfeste geometrische Ausgestaltung ist dadurch gegeben, daß der Ankerkopfabschnitt einen L-Querschnitt aufweist, wobei der Querschenkel einen Hintergriffabschnitt bildet und der Vertikalschenkel die Schraubenschaftabschnitte trägt. Dabei wird vorgeschlagen, daß ein Breitenstück in der Einsetzorientierung mit dem freien Ende des Querschenkels voran in die T-Nut einzusetzen ist, wobei der L-Querschnitt in seinem äußeren Eckbereich eine sich praktisch über die gesamte Länge des Ankerkopfes erstreckende Verschwenkungsaussparung, insbesondere eine Fase/Abrundung, aufweist. Die Aussparung ist so bemessen, daß einerseits das Breitenstück in der oben genannten, gegenüber der Nut-Vertikalrichtung um eine Nut-Längsachse verschwenkten Einsetzorientierung in die Nutöffnung einzusetzen und unter Beibehaltung des Nuteingriffs hemmungsfrei zu verschwenken ist.

Die Erfindung wird anhand von in den Figuren dargestellten Ausführungsbeispielen näher erläutert. Es zeigen:
- Fig.1: einen Querschnitt durch ein Nutenprofil mit einem in eine T-Nut des Nutenprofils eingreifenden nutseitigen Befestigungspartner, wobei der äußere Befestigungspartner aufgeschraubt ist,
- Fig.2: eine perspektivische Ansicht eines Längsabschnittes eines Nutenprofils mit einem Breitenstück in Eingriff und einem weiteren Breitenstück in der Einsetzorientierung außerhalb der T-Nut,
- Fig.3: eine Draufsicht auf einen Längsabschnitt einer T-Nut mit einem eingesetzten, nutseitigen Befestigungspartner, dessen Breitenstücke korrespondierende Breitenstufen aufweisen,
- Fig.4: eine perspektivische Teilansicht eines mit mehreren Befestigungspaarungen an einer Grundplatte befestigten Winkelstücks.

Gleiche Bezugszeichen beziehen sich in allen Figuren stets auf dieselben, konstruktiven Merkmale.

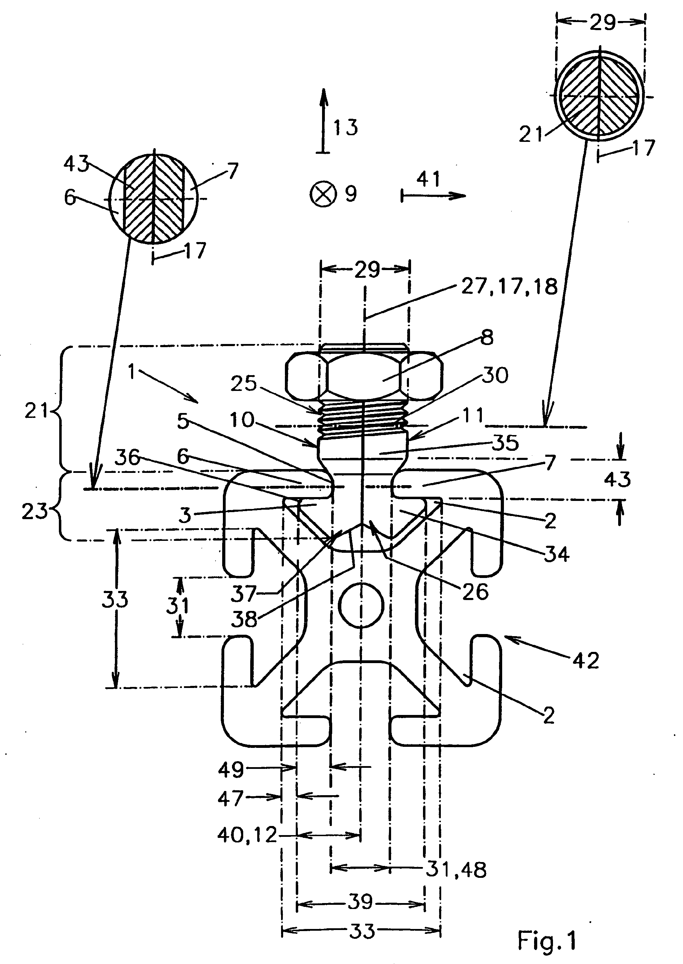

Fig.1 zeigt einen Querschnitt durch ein Nutenprofil 42. Das Nutenprofil 42 hat einen quaderförmigen Querschnitt. An jeder der Quaderseiten ist mittig jeweils eine T-Nut 2 - also insgesamt vier T-Nuten 2 - vorhanden. In die obere der T-Nuten 2 ist ein erfindungsgemäßer, nutseitiger Befestigungspartner 1 eingesetzt. Der nutseitige Befestigungspartner 1 greift mit den Hintergriffabschnitten 3 in die T-Nut 2 ein und hintergreift mit den Hintergriffabschnitten 3 die Hintergriffstege 6,7 der T-Nut 2.

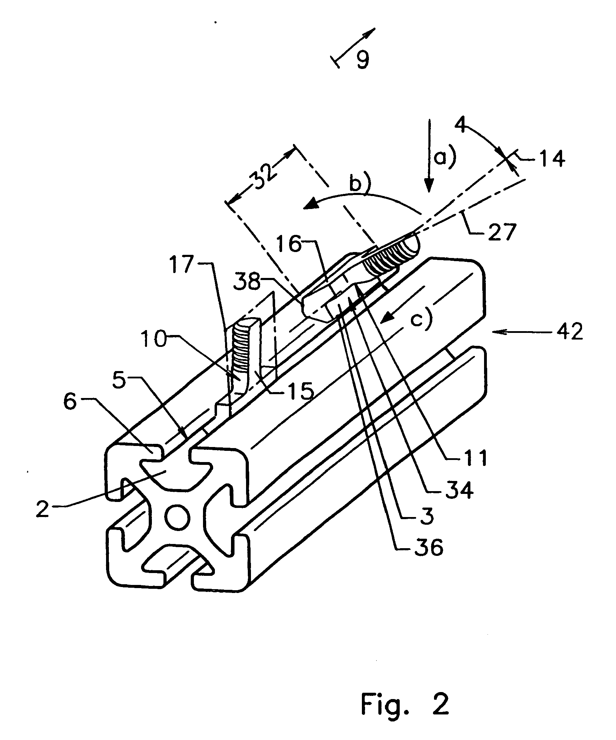

In Fig.2 ist gezeigt, wie der nutseitige Befestigungspartner 1 in die gezeigte Hintergrifflage gebracht wird. Die Hintergriffabschnitte 3 sind in einer Einsetzorientierung 4 durch eine Nutöffnung 5 in Nuteingriff und unter Beibehaltung ihres Nuteingriffs in Hintergriff mit den Hintergriffstegen 6,7 der T-Nut 2 zu bringen. Dann bildet der nutseitige Befestigungspartner 1 bezüglich eines korrespondierenden, äußeren Befestigungspartners 8 - hier eine Schraubenmutter - eine Verankerung, und zwar in Vertikalrichtung 13 und in Querrichtung 41 zur T-Nut 2 formschlüssig und in Nut-Längsrichtung 9 kraftschlüssig.

Der nutseitige Befestigungspartner 1 ist in zwei Breitenstücke 10,11 aufgeteilt. Die Breitenstücke sind separat und einstückig ausgeführt. Sie sind wie in Fig.2 gezeigt in die T-Nut 2 einzusetzen. Dort ist das eine Breitenstück 10 bereits in seine endgültige Hintergrifflage, in der es den Hintergriffsteg 6 der T-Nut 2 hintergreift, gebracht. Das andere Breitenstück 11 ist in seiner Einsetzorientierung 4 gezeigt. Die Einsetzorientierung 4 ist bezüglich der Nut-Längsrichtung 9 bereits lagerichtig. Dies bedeutet, daß das Breitenstück 11 in seiner Einsetzorientierung 4 in Längsausrichtung einzusetzen ist. Die Längsausrichtung ist praktisch die Orientierung in der Hintergrifflage bezüglich der Nut-Längsachse 14 bzw. der Nut-Längsrichtung 9. Insoweit ist das Breitenstück 11 gegenüber der Hintergrifforientierung weder um eine zur Nut-Vertikalrichtung noch um eine zur Nut-Querrichtung parallele Drehachse verdreht. Im gezeigten Ausführungsbeispiel der Fig.2 ist das Breitenstück 11 jedoch um eine Nut-Längsachse 14 in seiner Einsetzorientierung 4 verschwenkt. Dadurch ist die Projektion der Breite 12 des Breitenstücks 10,11 auf die Nut-Längsrichtung 9 lediglich so breit wie bzw. schmaler als die Nutweite 31 der T-Nut 2. Ist die Einsetzorientierung 4 bezüglich der Nut-Längsrichtung 9 praktisch lagerichtig, so ist diese Projektion auch ohne Verschwenkung gegenüber einer Nut-Längsachse 14 bezüglich der endgültigen Hintergrifforientierung derart schmal. Dadurch kann das Breitenstück 10,11 mit seinen Hintergriffabschnitten 3 in die T-Nut 2 eingeführt werden. Dies ist in Fig.1 gezeigt. Dort sind beide Breitenstücke 10,11 im Eingriff mit der T-Nut 2 und im Hintergriff mit den Hintergriffstegen 6,7.

Ausgehend von Fig.2 wird das verschwenkte Breitenstück 11 in dieser Einsetzorientierung 4 in die T-Nut 2 durch die Nutöffnung 5 hindurch in Eingriff gebracht. Daraufhin ist das Breitenstück 11 unter Beibehaltung des Eingriffs in die T-Nut 2 um eine Nut-Längsachse 14 innerhalb der T-Nut 2 zu verschwenken. Daraufhin ist das Breitenstück 11/sind die Breitenstücke 10,11 gegeneinander in Nut-Längsrichtung 9 zu verschieben, bis beide Breitenstücke (10,11) mit ihren Deckungsflächen 15,16 in Deckung sind, das heißt bis die Deckungsflächen 15,16 entlang einer gemeinsamen Trennfläche 17 (siehe Fig.1) aneinander anliegen. In Deckung im erfindungsgemäßen Sinn sind die Breitenstücke 10,11 dann, wenn sie in Nut-Längsrichtung 9 gegeneinander so positioniert sind, daß keine Überstände mehr vorhanden sind. Dann kann der äußere Befestigungspartner 8 (die Schraubenmutter) auf das entstehende Schraubengewinde 30 aufgeschraubt werden.

In dieser Konfiguration wirken die beiden Breitenstücke 10,11 als nutseitiger Befestigungspartner 1 zusammen.

Wie in Fig.1 und Fig.2 zu sehen, sind die Breitenstücke 10,11 bezüglich ihrer gemeinsamen Trennfläche 17 spiegelsymmetrisch und bezüglich einer gemeinsamen Achse 18 drehsymmetrisch. Durch diese Ausgestaltung sind die Breitenstücke 10, 11 kongruent. Dies bedeutet, daß sie eine praktisch völlig gleichartige Geometrie aufweisen, so daß lediglich eine Geometrie zu fertigen ist. Dann können wahllos zwei Breitenstükke aus einer Anzahl von gleichartigen Breitenstücken zu einem nutseitigen Befestigungspartner 1 zusammengefaßt werden.

Im gezeigten Ausführungsbeispiel hat jedes Breitenstück 10,11 einen Schraubenschaftabschnitt 21 und einen Ankerkopfabschnitt 23. Die Breitenstücke 10,11 sind einstückig, zwischen den genannten Abschnitten ist ein Übergangsabschnitt 43 vorhanden. Dadurch wirken die Breitenstücke in Deckung als Schraubenschaft 25 und Ankerkopf 26 zusammen. Dabei bildet der Ankerkopf 26 die Hintergriffabschnitte 3. Der Ankerkopf 26 gibt im Nuteingriff eine formschlüssige Drehhemmung bezüglich Verschraubung des Schraubenschafts 25. Dies ist besonders gut in Fig.2 zu sehen:

Die Länge 32 des jeweiligen Ankerkopfabschnitts 23 ist wesentlich größer als die Breite 40 des Ankerkopfabschnitts 23 (siehe Fig.1). Dadurch wäre zum einen in der Hintergrifflage innerhalb des Nut-Querschnitts der T-Nut 2 schon durch die sich ergebende Gesamtbreite 39 des eingreifenden Ankerkopfes 26 eine formschlüssige Drehhemmung bezüglich der Verdrehung um eine Achse in Nut-Vertikalrichtung 13 gegeben. Dies ist im Ausführungsbeispiel aber schon dadurch realisiert, daß die Gesamtbreite 48 der Übergangsabschnitte 43 (siehe Fig.1) praktisch der Nutweite 31 der T-Nut 2 - das ist die Breite der Nutöffnung 5 - entspricht.

Die genannten Übergangsabschnitte 43 zwischen den Hintergriffabschnitten 3 und dem aus der T-Nut 2 hervorstehenden Schraubenschaftabschnitt 21 des nutseitigen Befestigungspartners 1 können von praktisch beliebiger Länge sein. Zudem müssen diese Übergangsabschnitte 43 keinen zusätzlichen Anschlag in Bezug auf eine Verdrehsicherung aufweisen, da sie - sofern sie länger als die Nutweite 31 sind - ohnehin eine Drehhemmung geben. Diese Drehhemmung wird in jedem Falle auch durch die Hintergriffabschnitte 3 gesichert, sofern diese länger sind als die Innenbreite 33 der T-Nut 2. Dies ist mit der Erfindung ohne weiteres zu realisieren.

Die genannte Breite Kann auch geringfügig kleiner sein als die Nutweite 31. Auch dann ist nämlich eine formschlüssige Drehhemmung gegeben. Dadurch kann der Schraubenschaft 25 mit einem äußeren Befestigungspartner 8 verschraubt werden und ist des weiteren auch gegen Verdrehungen durch die Drehhemmung gehemmt. Insgesamt ergibt sich bei Verschraubung mit dem äußeren Befestigungspartner 8 eine in Nut-Vertikalrichtung 13 und in Nut-Querrichtung 41 formschlüssige Bewegungshemmung und in Nut-Längsrichtung 9 bei entsprechend starker Verschraubung eine kraftschlüssige Festsetzung der Befestigungspaarung. Die Verschraubung wird dadurch ermöglicht, daß im Nuteingriff des Ankerkopfes 26 der Schraubenschaft 25 aus der T-Nut 2 verschraubbar hervorragt.

Der nutseitige Befestigungspartner 1 ist praktisch ein Schraubanker herkömmlicher Art, der an einer Kopfseite eines Nutenprofils 42 eingeführt werden kann. Damit die erfindungsgemäßen Vorteile erreicht sind, ist ein solcher Schraubanker im wesentlichen parallel zur Schraubenachse 27 des Schraubenschafts 25 bis zu seinem Ankerkopf 26 durchgehend in zwei Breitenstücke 10,11 geteilt.

Dadurch sind der Geometrie unter Berücksichtigung der resultierenden Festigkeit eines nutseitigen Befestigungspartners 1 praktisch keinerlei Grenzen gesetzt. Während mit einer Hammerkopfschraube durch die 90°-Verdrehung um eine Nut-Vertikalachse die Länge der Hintergriffabschnitte 3 (das ist die Erstreckung in Nut-Längsrichtung 9) im wesentlichen auf die Nutweite 31 - und damit sehr eng - beschränkt ist, kann die Länge 32 des Ankerkopfabschnitts 23 bei der Erfindung praktisch beliebig sein. Sie ist insbesondere größer als die Nutweite 31 der T-Nut 2 und insbesondere größer als die Innenbreite 33 der T-Nut 2. Auch der Nenndurchmesser 29 des Schraubgewindes 30 kann größer oder gleich der Nutweite 31 sein. Insoweit bestehen praktisch keinerlei Einschränkungen.

Die Breite 39 des Ankerkopfes 26 setzt sich zusammen aus der Summe der Einzelbreiten 40 der Ankerkopfabschnitte 23 der beiden Breitenstücke 10,11. Die Breite 40 des jeweiligen Ankerkopfabschnittes entspricht demzufolge im wesentlichen der (größten) Breite 12 des jeweiligen Breitenstücks 10,11 im Bereich der Hintergriffabschnitte 3, das ist der jeweilige Eingriffsabschnitt.

Das sich ergebende Hintergriffmaß 49 läßt ein Breitenspiel 47 zwischen der Innenwand der T-Nut 2 und der jeweiligen Außenfläche des Ankerkopfabschnitts 23 frei. Dadurch ist das Breitenstück 10,11 leicht einzusetzen und längs zu verschieben.

Im einzelnen hat der Ankerkopfabschnitt 23 einen L-Querschnitt. Der Querschenkel 34 des L bildet jeweils einen Hintergriffabschnitt 3. Der Vertikalschenkel 35 trägt die Schraubenschaftabschnitte 21. Ein solches Breitenstück 10, 11 ist in der Einsetzorientierung 4 - entweder lagerichtig bezüglich der Nut-Längsrichtung 9 oder um eine Nut-Längsachse 14 gegenüber der Nut-Längsrichtung 9 verschwenkt - in die T-Nut 2 einzusetzen. Das Einsetzen in der Einsetzorientierung 4 erfolgt mit dem freien Ende 36 des Querschenkels 34 voran. Dieses Ende 36 wird zuerst eingesetzt.

Dabei weist der L-Querschnitt in seinem äußeren Eckbereich 37 eine sich praktisch über die gesamte Länge 32 des Ankerkopfabschnitts 23 erstreckende Aussparung, im gezeigten Ausführungsbeispiel eine Fase 38 auf. Dies ist insbesondere zweckmäßig bei einer Einsetzorientierung 4, die gegenüber der in Fig.1 gezeigten Hintergrifforienterung um eine Nut-Längsachse 14 verschwenkt ist. Dadurch wird das Einsetzen und das Verschwenken um diese Achse unter Beibehaltung des Nuteingriffs erleichtert bzw. erst ermöglicht. Die gezeigte Fase 38 vermeidet eine Verkantung bzw. Verschwenkungshemmung insbesondere im Bereich des dem Hintergriffabschnitt 3 gegenüberliegenden Hintergriffstegs 6,7. Dadurch kann die Innenbreite 33 der T-Nut 2 unter Berücksichtigung der Geometrie ihres Innenquerschnitts praktisch für den Hintergriff voll ausgenutzt werden. Wie in Fig.2 gezeigt, ist die Breite in der Einsetzorientierung 4 des Breitenstücks 11 durch die Quererstreckung zwischen der Fase 38 und dem freien Ende 36 des Querschenkels 35 gegeben. Dadurch wird die Einsetzbreite, daß ist die vertikale Projektion auf die Nutöffnung 5, noch geringer.

Dadurch, daß der äußere Eckbereich 37 durch die Fase 38 dem gegenüberliegenden Hintergriffsteg 6,7 praktisch ausweicht, kann beispielsweise ein Breitenstück 10,11 unter gleichzeitiger Einsetzbewegung - das ist Verschiebung in Nut-Vertikalrichtung 13 in die Eingriffslage - und gleichzeitig in die endgültige Hintergrifforientierung verschwenkt werden. Dies ist immer noch ein sehr einfach zu beherrschender Vorgang, der aber eine praktisch vollständige Ausnutzung der Geometrie der T-Nut 2 für die resultierende Festigkeit der Befestigungspaarung erlaubt.

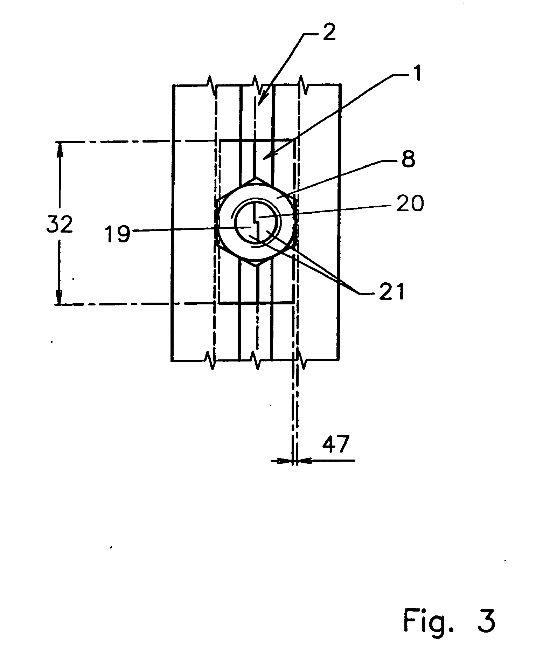

Fig.3 zeigt eine Draufsicht auf ein weiteres Ausführungsbeispiel der vorliegenden Erfindung. Der gezeigte, nutseitige Befestigungspartner ist in seiner Montageposition, d.h. mit beiden Breitenstücken (10,11) im Hintergriff, wobei die Breitenstücke (10,11) in Deckung sind. Dort ist im Bereich der Schraubenachse 27 zwischen den zusammenwirkenden Schraubenschaftabschnitten 21 und den - in Fig. 3 nicht gezeigten - Ankerkopfabschnitten 23 jeweils eine Breitenstufe 19,20 des jeweiligen Breitenstücks 10,11 gezeigt. Nach dem Einsetzen des jeweiligen Breitenstücks 10,11 in die T-Nut 2 werden die Breitenstücke 10,11 unter Beibehaltung des Nuteingriffs gegeneinander längsverschoben. Bei der gezeigten relativen Einsetzorientierung schlagen die Breitenstücke 10,11 mit den korrespondierenden Breitenstufen 19,20 aneinander an und sind somit bezüglich weiterer Längsverschiebung gehemmt. Dadurch wird eine automatische Justierung und Arretierung der Breitenstücke 10,11 in ihrer Deckungslage relativ zueinander erlaubt.

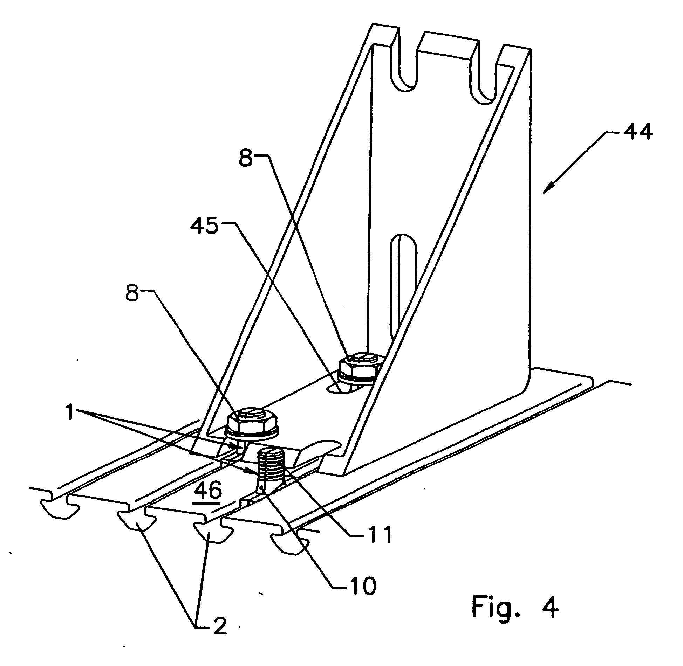

Schließlich zeigt Fig.4 die Anbringung eines Winkelstücks 44 mittels mehrerer Befestigungspaarungen gemäß der Erfindung. Auf die beiden nutseitigen Befestigungspartner 1 sind jeweils äußere Befestigungspartner 8 mit Unterlegscheibe aufgeschraubt. Dadurch wird das Winkelstück 44 an einer gezeigten Grundplatte 46 befestigt. Aufgrund der Langlöcher 45 kann das Winkelstück 44 in Nut-Längsrichtung 9 nachjustiert werden. Der vordere nutseitige Befestigungspartner 1 ist noch nicht mit einem äußeren Befestigungspartner 8 verschraubt.

Die einzelnen Breitenstücke 10,11 sind in die T-Nut 2 eingesetzt und in der Deckungslage gezeigt. Wesentlich ist, daß sie zum einen von der Kopfseite der Grundplatte 46 eingeführt werden können aber insbesondere auch - falls diese beispielsweise verbaut ist - an einer beliebigen Stelle der T-Nut 2 einzeln eingesetzt werden können. Beispielsweise könnte ein Breitenstück 10 in die T-Nut 2 durch die Nutöffnung 5 hindurch eingesetzt und praktisch bis in seine Endlage - das ist der Eingriff in das gezeigte Langloch 45 - längsverschoben werden. Daraufhin könnte der in der T-Nut 2 frei werdende Platz zum Einführen des korrespondierenden, zweiten Befestigungspartners 11 genutzt und dieser ebenfalls in die genannte Lage in Deckung mit dem schon eingeführten Befestigungspartner 10 verschoben werden.

### Bezugszeichenliste:

- 1: Nutseitiger Befestigungspartner
- 2: T-Nut
- 3: Hintergriffabschnitt
- 4: Einsetzorientierung
- 5: Nutöffnung
- 6: Hintergriffsteg
- 7: Hintergriffsteg
- 8: äußerer Befestigungspartner
- 9: Nut-Längsrichtung
- 10: Breitenstück
- 11: Breitenstück
- 12: Breite des Breitenstücks
- 13: Nut-Vertikalrichtung
- 14: Nut-Längsachse
- 15: Deckungsfläche
- 16: Deckungsfläche
- 17: Gemeinsame Trennfläche
- 18: Gemeinsame Achse
- 19: Breitenstufe
- 20: Breitenstufe
- 21: Schraubenschaftabschnitt
- 23: Ankerkopfabschnitt
- 25: Schraubenschaft
- 26: Ankerkopf
- 27: Schraubenachse
- 29: Nenndurchmesser des Schraubgewindes
- 30: Schraubgewinde
- 31: Nutweite der T-Nut
- 32: Länge des Ankerkopfabschnitts
- 33: Innenbreite der T-Nut
- 34: Querschenkel
- 35: Vertikalschenkel
- 36: Freies Ende des Querschenkels
- 37: Äußerer Eckbereich des L-Querschnitts
- 38: Fase
- 39: Breite des Ankerkopfes
- 40: Breite des Ankerkopfabschnitts
- 41: Nut-Querrichtung
- 42: Nutenprofil
- 43: Übergangsabschnitt
- 44: Winkelstück
- 45: Langloch
- 46: Grundplatte
- 47: Breitenspiel
- 48: Gesamtbreite der Übergangsabschnitte
- 49: Hintergriffmaß

## Patentansprüche

1. Nutseitiger Befestigungspartner (1) für eine Befestigungspaarung an einem eine T-Nut (2) aufweisenden Träger (42,46), welcher in einer Montageposition in die T-Nut (2) mit Hintergriffabschnitten (3) in Eingriff bringbar ist, die in einer Einsetzorientierung (4) durch die Nutöffnung (5) in Nuteingriff und in Hintergriff mit Hintergriffstegen (6,7) der T-Nut (2) bringbar sind, so daß der nutseitige Befestigungspartner (1) bezüglich eines korrespondierenden, äußeren Befestigungspartners (8) vertikal und quer zur T-Nut (2) formschlüssig und in Nut-Längsrichtung (9) kraftschlüssig in der T-Nut (2) verankerbar ist, wobei der nutseitige Befestigungspartner (1) längs geteilt ist und daher aus zumindest zwei Breitenstücken (10,11) besteht, welche die Hintergriffabschnitte (3) bilden und von denen jedes im Bereich der Hintergriffabschnitte (3) von derart geringer Breite (12) ist, daß es eine in Nut-Längsrichtung (9) bezüglich seiner Montageposition praktisch lagerichtige Einsetzorientierung (4) aufweist, und wobei jedes Breitenstück (10,11) unter Beibehaltung seines Nuteingriffs in Dekkung mit den übrigen Breitenstücken (10,11) bringbar ist, die in Deckung als nutseitiger Befestigungspartner (1) zusammenwirken und die jeweils einen Schraubenschaftabschnitt (21) und einen Ankerkopfabschnitt (23) aufweisen, die in Deckung als Schraubenschaft (25) und Ankerkopf (26) zusammenwirken, wobei der Ankerkopf (26) die Hintergriffabschnitte (3) bildet, die Gesamtbreite (48) von Übergangsabschnitten (43) zwischen den Schraubenschaftabschnitten (21) und den Ankerkopfabschnitten (23) der Befestigungspartner (1) praktisch der Nutweite (31) der T-Nut (2) entspricht, ein Ankerkopfabschnitt (23) eine größere Länge (32) aufweist, als die Nutweite (31) der T-Nut (2) beträgt, insbesondere als Innenbreite (33) der T-Nut (2) beträgt, und der Schraubenschaft (25) bei Nuteingriff des Ankerkopfes (26) aus der T-Nut (2) verschraubbar hervorragt, **dadurch gekennzeichnet, daß** der Nenndurchmesser (29) eines Schraubgewindes (30) der beiden Schraubenschaftabschnitte (21) größer der Nutweite (31) ist, und daß in Montageposition die Übergangsabschnitte (43) an den freien Enden der Hintergriffstege (6,7) umgreifend anliegen.

2. Nutseitiger Befestigungspartner nach Anspruch 1, **dadurch gekennzeichnet, daß** ein Breitenstück (10,11) eine in Nut-Vertikalrichtung (13) bezüglich seiner Montageposition praktisch lagerichtige Einsetzorientierung (4) aufweist.

3. Nutseitiger Befestigungspartner nach Anspruch 1, **dadurch gekennzeichnet, daß** ein Breitenstück (10,11) in seiner Einsetzorientierung (4) bezüglich seiner Montageposition gegenüber der Nut-Vertikalrichtung (13) um eine Nut-Längsachse (14) verschwenkbar ist.

4. Nutseitiger Befestigungspartner nach einem der Ansprüche 1 bis 3, **dadurch gekennzeichnet, daß** die Breitenstücke (10,11) korrespondierende Deckungsflächen (15,16) aufweisen, die in Deckung entlang einer gemeinsamen Trennfläche (17) aneinander anliegen.

5. Nutseitiger Befestigungspartner nach Anspruch 4, **dadurch gekennzeichnet, daß** die Breitenstücke (10,11) bezüglich der gemeinsamen Trennfläche (17) praktisch spiegelsymmetrisch sind und/oder daß die Breitenstücke (10,11) bezüglich einer gemeinsamen Achse (18) drehsymmetrisch sind.

6. Nutseitiger Befestigungspartner nach einem der Ansprüche 1 bis 5, **dadurch gekennzeichnet, daß** die Breitenstücke (10,11) durch Längsverschiebung in Deckung bringbar sind und daß die Breitenstücke (10,11) korrespondierende Dekkungsanschläge aufweisen, die die Längsverschiebung in eine jeweilige Längsrichtung bei Deckung der korrespondierenden Breitenstücke (10,11) hemmen.

7. Nutseitiger Befestigungspartner nach Anspruch 6, **dadurch gekennzeichnet, daß** die Deckungsanschläge einander zugewandte, korrespondierende Breitenstufen (19, 20) der Breitenstücke (10,11) sind.

8. Nutseitiger Befestigungspartner nach Anspruch 1, **dadurch gekennzeichnet, daß** die Breitenstücke (10,11) die Teile eines im wesentlichen parallel zur Schraubenachse (27) des Schraubenschaftes (25) bis zu seinem Ankerkopf (26) geteilten Schraubankers sind.

9. Nutseitiger Befestigungspartner nach Anspruch 3, **dadurch gekennzeichnet, daß** ein Breitenstück (10,11) in der Einsetzorientierung (4) mit dem freien Ende (36) des Querschenkels (34) voran in die T-Nut (2) einsetzbar ist, wobei ein L-Querschnitt in seinem äußeren Eckbereich (37) eine sich praktisch über die gesamte Länge (32) des Ankerkopfes (23) erstreckende Verschwenkungsaussparung, insbesondere eine Fase (38)/Abrundung, aufweist.

## Claims

1. Groove-side attachment partner (1) for an attachment pair on a beam (42, 46) comprising a T-groove (2), which attachment partner can engage into the T-groove (2) in an assembled position by means of rearwardly engaging portions (3) which in an insertion orientation (4) can engage the groove through the groove opening (5) and can be brought into rearward engagement by means of rearwardly engaging webs (6, 7) of the T-groove (2), so that the groove-side attachment partner (1) can be anchored in the T-groove (2) with respect to a corresponding outer attachment partner (8) in a positive-locking manner vertically and transversely with respect to the T-groove (2) and in a non-positive-locking manner in the groove longitudinal direction (9), wherein the groove-side attachment partner (1) is longitudinally divided and thus consists of at least two width pieces (10, 11) which form the rearwardly engaging portions (3) and each of which in the region of the rearwardly engaging portions (3) has such a small width (12) that it has an insertion orientation (4) which in the groove longitudinal direction (9) is practically correct in terms of its positional arrangement with respect to its assembled position, and wherein each width piece (10, 11) can be brought into alignment with the remaining width pieces (10, 11) whilst still engaging the groove, the remaining width pieces in alignment co-operating as the groove-side attachment partner (1) and each comprising a screw shank portion (21) and an anchor head portion (23) which in alignment co-operate as the screw shank (25) and the anchor head (26), wherein the anchor head (26) forms the rearwardly engaging portions (3), the total width (48) of transition portions (43) between the screw shank portions (21) and the anchor head portions (23) of the attachment partners (1) practically corresponds to the groove width (31) of the T-groove (2), an anchor head portion (23) has a length (32) which is longer than the groove width (31) of the T-groove (2), in particular than the inner width (33) of the T-groove (2), and the screw shank (25) protrudes out of the T-groove (2) in a screwable manner when the anchor head (26) engages the groove, **characterised in that** the nominal diameter (29) of a screw thread (30) of the two screw shank portions (21) is larger than the groove width (31), and **in that** in the assembled position the transition portions (43) lie against and encompass the free ends of the rearwardly engaging webs (6, 7).

2. Groove-side attachment partner as claimed in Claim 1, **characterised in that** a width piece (10, 11) has an insertion orientation (4) which in the groove vertical direction (13) is practically correct in terms of its positional arrangement with respect to its assembled position.

3. Groove-side attachment partner as claimed in Claim 1, **characterised in that** in its insertion orientation (4) with respect to its assembled position, a width piece (10, 11) can be pivoted about a groove longitudinal axis (14) with respect to the groove vertical direction (13).

4. Groove-side attachment partner as claimed in any one of Claims 1 to 3, **characterised in that** the width pieces (10, 11) comprise corresponding alignment surfaces (15, 16) which in alignment lie against one another along a common separating surface (17).

5. Groove-side attachment partner as claimed in Claim 4, **characterised in that** the width pieces (10, 11) are practically mirror-symmetrical with respect to the common separating surface (17) and/or **in that** the width pieces (10, 11) are rotationally symmetrical with respect to a common axis (18).

6. Groove-side attachment partner as claimed in any one of Claims 1 to 5, **characterised in that** the width pieces (10, 11) can be brought into alignment by longitudinal displacement, and **in that** the width pieces (10, 11) comprise corresponding alignment stops which inhibit the longitudinal displacement in a respective longitudinal direction when the corresponding width pieces (10, 11) are aligned.

7. Groove-side attachment partner as claimed in Claim 6, **characterised in that** the alignment stops are mutually facing, corresponding width steps (19, 20) of the width pieces (10, 11).

8. Groove-side attachment partner as claimed in Claim 1, **characterised in that** the width pieces (10, 11) are the parts of a screw anchor which is split up to its anchor head (26) substantially in parallel with the screw axis (27) of the screw shank (25).

9. Groove-side attachment partner as claimed in Claim 3, **characterised in that** in the insertion orientation (4) a width piece (10, 11) can be inserted into the T-groove (2) with the free end (36) of the transverse limb (34) at the front, wherein an L-cross-section in its outer corner region (37) comprises a pivot recess, in particular a bevel (38)/rounded portion, extending over practically the entire length (32) of the anchor head (23).

## Revendications

1. Elément complémentaire de fixation côté rainure (1) pour un accouplement de fixation sur un support (42, 46) pourvu d'une rainure en T (2), qui, en position de montage, est apte à être enclenché dans la rainure en T (2) grâce à des sections d'accrochage par l'arrière (3) qui sont aptes à être enclenchées dans la rainure suivant une orientation d'insertion (4), à travers l'ouverture de rainure (5), et à être enclenchées par l'arrière avec des rebords d'accrochage par l'arrière (6, 7) de la rainure en T (2), de sorte que l'élément de fixation côté rainure (1) peut être ancré dans la rainure en T (2) par complémentarité de forme et par force dans le sens longitudinal (9) de la rainure, à la verticale par rapport à un élément de fixation extérieur correspondant (8) et transversalement par rapport à la rainure en T (2), étant précisé que l'élément de fixation côté rainure (1) est divisé longitudinalement et se compose donc d'au moins deux pièces en largeur (10, 11) qui définissent les sections d'accrochage par l'arrière (3) et qui présentent chacune, dans la zone desdites sections (3), une largeur (12) tellement faible qu'elles présentent une orientation d'insertion (4) pratiquement correcte dans le sens longitudinal de rainure (9), par rapport à leur position de montage, étant précisé que chaque pièce en largeur (10, 11), en conservant son contact avec la rainure, est apte à venir couvrir les autres pièces en largeur (10, 11) qui coopèrent, une fois couvertes, sous la forme d'un élément de fixation côté rainure (1) et qui comportent chacune une partie de tige de vis (21) et une partie de tête d'ancrage (23) coopérant, une fois couvertes, sous la forme d'une tige de vis (25) et d'une tête d'ancrage (26), et étant précisé que la tête d'ancrage (26) forme les sections d'accrochage par l'arrière (3), que la largeur totale (48) de sections de transition (43) entre les sections de tige de vis (21) et les sections de tête d'ancrage (23) des éléments complémentaires de fixation (1) correspond pratiquement à la largeur (31) de la rainure en T (2), qu'une partie de tête d'ancrage (23) a une longueur (32) supérieure à la largeur (31) de la rainure en T (2), en particulier à la largeur intérieure (33) de la rainure (2), et que lorsque la tête d'ancrage (26) est enclenchée dans la rainure (2), la tige de vis (25) dépasse de celle-ci en pouvant être vissée,
**caractérisé en ce que** le diamètre nominal (29) d'un filetage (30) des deux sections de tige de vis (21) est plus grand que la largeur de rainure (31), et **en ce qu'**en position de montage, les sections de transition (43) sont appliquées contre les extrémités libres des rebords d'accrochage par l'arrière (6, 7) de manière enveloppante.

2. Elément complémentaire de fixation côté rainure selon la revendication 1, **caractérisé en ce qu'**une pièce en largeur (10, 11) présente une orientation d'insertion (4) pratiquement correcte dans le sens vertical (13) de la rainure, par rapport à sa position de montage.

3. Elément complémentaire de fixation côté rainure selon la revendication 1, **caractérisé en ce qu'**une pièce en largeur (10, 11), dans son orientation d'insertion (4) par rapport à sa position de montage, est apte à pivoter autour d'un axe longitudinal de rainure (14) par rapport au sens vertical (13) de la rainure.

4. Elément complémentaire de fixation côté rainure selon l'une des revendications 1 à 3, **caractérisé en ce que** les pièces en largeur (10, 11) présentent des surfaces de recouvrement correspondantes (15, 16) qui, quand elles se recouvrent, sont appliquées l'une contre l'autre le long d'une surface de séparation commune (17).

5. Elément complémentaire de fixation côté rainure selon la revendication 4, **caractérisé en ce que** les pièces en largeur (10, 11) sont formées pratiquement en miroir par rapport à la surface de séparation commune (17) et/ou **en ce que** les pièces en largeur (10, 11) présentent une symétrie de révolution par rapport à un axe commun (18).

6. Elément complémentaire de fixation côté rainure selon l'une des revendications 1 à 5, **caractérisé en ce que** les pièces en largeur (10, 11) sont aptes à venir se recouvrir grâce à un déplacement longitudinal et **en ce que** les pièces en largeur (10, 11) présentent des butées de recouvrement correspondantes qui empêchent le déplacement longitudinal dans un sens longitudinal une fois que lesdites pièces correspondantes (10, 11) se recouvrent.

7. Elément complémentaire de fixation côté rainure selon la revendication 6, **caractérisé en ce que** les butées de recouvrement sont constituées par des épaulements correspondants (19, 20) des pièces en largeur (10, 11) qui sont tournés l'un vers l'autre.

8. Elément complémentaire de fixation côté rainure selon la revendication 1, **caractérisé en ce que** les pièces en largeur (10, 11) constituent les parties d'un ancrage à vis qui sont divisées sensiblement parallèlement à l'axe (27) de la tige de vis (25) jusqu'à la tête d'ancrage (26) de celle-ci.

9. Elément complémentaire de fixation côté rainure selon la revendication 3, **caractérisé en ce qu'**une pièce en largeur (10, 11) est apte à être insérée dans la rainure en T (2), dans l'orientation d'insertion (4), avec l'extrémité libre (36) de la branche transversale (34) en avant, étant précisé qu'une section transversale en L présente dans sa zone d'angle extérieure (37) un creux de pivotement qui s'étend pratiquement sur toute la longueur (32) de la tête d'ancrage (23), en particulier un biseau (38)/une partie arrondie.
